# EUROPEAN PATENT APPLICATION

(11) **EP 4 545 333 A1**
(43) Date of publication of application: **30.04.2025**
(21) Application number: 23940932.9
(22) Date of filing: 01.09.2023
(51) Int. Cl.: B60K 7/00, H02K 5/10, H02K 7/116

(54) **HUB DRIVING ASSEMBLY**

(71) Applicant: Shanghai Pangood Power Technology Co., Ltd., Shanghai 201615 (CN)
(72) Inventor: CHEN, Jinhua, Songjiang District Shanghai 201615 (CN); TANG, Lei, Songjiang District Shanghai 201615 (CN)
(74) Representative: Gerstein, Hans Joachim
(86) International application number: PCT/CN2023/116395
(87) International publication number: WO 2025/043689

(57) **Abstract**

A wheel hub driving assembly is provided, including: an output shaft (600) connected to a wheel hub (700); a reduction assembly (200) which is in transmission connection with an outer ring of the output shaft (600), where two connection surfaces (2001) are respectively provided on both sides of the reduction assembly (600) in an axial direction of the output shaft (600); a brake assembly (300) fixed to the outer ring of the output shaft (600) and connected to the connection surface (2001) of the reduction assembly (300) facing an end face of the wheel hub; a motor (100) circumferentially arranged outside the output shaft (600) and connected to the connection surface (2001) of the reduction assembly (200) away from the brake assembly (300). An air gap surface (1000) of the motor (100) is parallel to the connection surfaces (2001). The reduction assembly (200), the brake assembly (300) and the motor (100) are located within a periphery of the wheel hub (700). The reduction assembly, the brake assembly and the motor are arranged along the axial direction of the output shaft. The overall axial dimension is reduced to achieve an advantage of small overall occupied space, high power density can be designed, and there is sufficient space for arranging a corresponding sealing structure, so that the wheel hub driving assembly can operate stably and reliably.

## Description

### FIELD

The present application relates to the technical field of wheel hubs, and in particular to a wheel hub driving assembly.

### BACKGROUND

A wheel hub driving assembly integrates a motor, a reduction system and a brake system in a wheel hub. The motor is a core component, which drives the wheel hub to rotate through its rotor shaft and the reduction system. The brake system brakes the wheel hub by holding the rotor shaft of the motor tightly.

With the popularization of the application of wheel hub drive, the demand for improving power of a wheel hub driving assembly and reducing volume of the wheel hub driving assembly has increased, especially for specific operating conditions and worksites. For example, how to lighten the existing structure of the wheel hub driving assembly in an original space, or how to improve the power density of the wheel hub driving assembly in the original space, has become a goal of designing the wheel hub driving assembly.

Further, in a case that a wheel hub driving assembly with high power is expected to be provided but no more space can be provided in the axial direction for mounting the wheel hub driving assembly, the space for mounting the wheel hub driving assembly is extremely limited. In addition to considering the structural dimensions to integrate all of the motor, the reduction system and the brake system into the wheel hub, it is also expected to consider the overall structural strength, sealing and others of the wheel hub driving assembly.

### SUMMARY

To solve the above problem, a wheel hub driving assembly is provided according to the present application, which can further miniaturize the wheel hub driving assembly, increase the power density, and design a rational sealing structure, in a limited mounting space, thereby improving the performance of the wheel hub driving assembly.

The wheel hub driving assembly includes:
an output shaft, connected to a wheel hub;
a reduction assembly, in transmission connection with an outer ring of the output shaft, where two connection faces are respectively provided on both sides of the reduction assembly in an axial direction of the output shaft;
a brake assembly, fixed to the outer ring of the output shaft and connected to one of the two connection faces of the reduction assembly facing an end face of the wheel hub; and
a motor, circumferentially arranged outside the output shaft and connected to the other of the connection faces of the reduction assembly away from the brake assembly, where an air gap face of the motor is parallel to the connection faces, and the reduction assembly, the brake assembly and the motor are located within a periphery of the wheel hub.

In a preferred embodiment, the wheel hub driving assembly further includes a housing, and the housing includes:
a front housing, including a front end cover and a reduction housing, where the reduction housing is connected to an outer side surface of the front end cover, and the motor is connected to an inner side surface of the front end cover;
a sealing housing, where an inner side surface of the sealing housing is connected to one side of the reduction housing away from the front end cover, and an outer side surface of the sealing housing is connected to the brake assembly; and
the reduction assembly is located in the reduction housing, and is sealed between the front end cover and the sealing housing.

In a preferred embodiment, the brake assembly includes:
a brake disc, where an output shaft flange is provided on the outer ring of the output shaft, the brake disc abuts against the end face of the wheel hub and the output shaft flange and is fixed between the end face of the wheel hub and the output shaft flange, and brake faces are formed on two axial sides of the brake disc; and
at least one brake caliper, fixed to the outer side surface of the sealing housing and connected to the two brake faces of the brake disc for braking.

In a preferred embodiment, the housing further includes:
a rear housing, including a rear end cover and a rear motor housing, where an inner ring of the rear end cover extends to be connected to the rear motor housing; and
a side housing, connected to an outer ring of the front end cover and an outer ring of the rear end cover, where
the front housing further includes a front motor housing, an inner ring of the front end cover extends to be connected to the front motor housing, and the motor is arranged between the front end cover and the rear end cover; and
a radial inner side of the motor is sealed by the front motor housing and the rear motor housing, and a radial outer side of the motor is sealed by the side housing.

In a preferred embodiment, the motor includes:
a front stator, fixed to the inner side surface of the front end cover;
a rear stator, fixed to an inner side surface of the rear end cover;
a rotor, retained between the front stator and the rear stator, where an air gap is provided between the rotor and each of the front stator and the rear stator, and the air gap face is formed between the rotor and each of the front stator and the rear stator; and
a rotating shaft, rotatably connected to an inner ring of the front motor housing and an inner ring of the rear motor housing in a sealed manner, where a radial inner side of the rotor extends between the front motor housing and the rear motor housing, and is fixedly connected to the rotating shaft.

In a preferred embodiment, the wheel hub driving assembly further includes a wheel hub bearing assembly, and the wheel hub bearing assembly includes:
an inner bearing ring, fixedly connected to the outer ring of the output shaft; and
an outer bearing ring, fixed between the inner bearing ring and the rotating shaft.

In a preferred embodiment, the rear housing further includes a connection housing connected to an outer side surface of the rear end cover, and an outer ring flange is provided on an outer ring of the outer bearing ring and is fixed to the connection housing.

In a preferred embodiment, the wheel hub driving assembly further includes:
a first bearing, connected between the rear motor housing and the rotating shaft;
a second bearing, connected between the front motor housing and the rotating shaft; and
a third bearing, connected between the sealing housing and the output shaft.

In a preferred embodiment, the reduction assembly is a planetary gear reduction assembly. Two axial sides of a planetary carrier of the reduction assembly are respectively limited by a fourth bearing and the sealing housing, and the fourth bearing is connected between the front end cover and the planetary carrier. The sealing housing is provided with a stopper for abutting against a gear ring of the reduction assembly.

In a preferred embodiment, the wheel hub driving assembly further includes:
a first oil seal, arranged between the rear motor housing and the rotating shaft and located on an outer side of the first bearing;
a second oil seal, arranged between the front motor housing and the rotating shaft and located on an outer side of the second bearing;
a third oil seal, arranged between the sealing housing and the output shaft and located on an outer side of the third bearing; and
a fourth oil seal, located between the wheel hub bearing assembly and the sealing housing and arranged between the output shaft and the rotating shaft.

In a preferred embodiment, the wheel hub driving assembly further includes a rotary transformer arranged between the rear motor housing and the rotating shaft and located between the first bearing and a rotating shaft flange of the rotating shaft.

Compared with the conventional technology, the present technical solutions have the following advantages.

Firstly, the two connection faces of the reduction assembly are parallel to each other. The motor and the brake assembly are respectively connected to the two connection faces on the two axial sides of the reduction assembly, so that the motor, the reduction assembly and the brake assembly are arranged along the axial direction of the output shaft. The air gap faces of the motor are parallel to the connection faces, so that the motor may be an axial field motor. The axial field motor has the characteristics of small axial dimension, high power density, light weight and high output torque and so on, so that the overall axial dimension is reduced, the entire assembly occupies a small space, high power density can be achieved, and there is sufficient space for arranging a corresponding sealing structure. Thus, the wheel hub driving assembly can operate stably and reliably.

Secondly, the air gap faces of the motor are parallel to the connection faces, so that during the design of the torque of the motor, only the radial dimension of the motor is changed, and the axial dimension of the motor is almost unchanged. It can be seen that, the space for designing the motor can be increased accordingly on the premise that the axial dimension of the entire wheel hub driving assembly is small. Moreover, the brake assembly and the reduction assembly are designed with the radial dimension of the motor as an upper limit, so that the reduction assembly with good transmission performance and the brake assembly with good braking performance can be designed. Furthermore, each of the motor, the reduction assembly and the brake assembly is of a flat structure, so that the wheel hub driving assembly formed by assembling the motor, the reduction assembly and the brake assembly is flat, and the wheel hub driving assembly can utilize the space inside the wheel hub and can be disposed inside the wheel hub.

The present application is further described hereinafter in conjunction with the accompanying drawings and embodiments.

### BRIEF DESCRIPTION OF THE DRAWINGS

FIG. 1 is a schematic structural view showing an assembly of a wheel hub driving assembly and a wheel hub according to the present application;
FIG. 2 is a schematic enlarged view of a portion A in FIG. 1;
FIG. 3 is a sectional view of a housing according to the present application;
FIG. 4 is a front view of a wheel hub driving assembly according to the present application;
FIG. 5 is a back view of the wheel hub driving assembly according to the present application;
FIG. 6 is a front view of the housing according to the present application;
FIG. 7 is a back view of the housing according to the present application; and
FIG. 8 is a schematic structural view showing an assembly of a housing and a rotating shaft according to the present application.

### DETAILED DESCRIPTION OF THE EMBODIMENTS

The present application is disclosed in the following description so that those skilled in the art are capable of implementing the present application. Preferred embodiments in the following description are only examples, and other variations may be obvious to those skilled in the art. The basic principle of the present application defined in the following description may be applied to other implementation solutions, modified solutions, improved solutions, equivalent solutions and other technical solutions without departing from the spirit and scope of the present application.

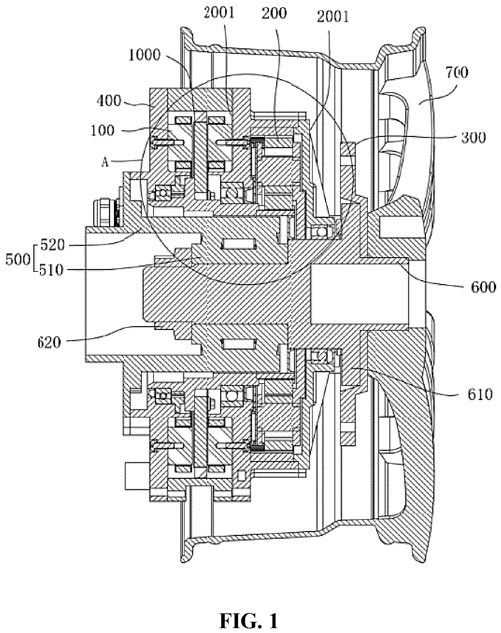

As shown in FIG. 1, a wheel hub driving assembly includes:
an output shaft 600, connected to a wheel hub 700;
a reduction assembly 200, in transmission connection with an outer ring of the output shaft 600, where two connection faces 2001 are respectively provided on both sides of the reduction assembly 200 in an axial direction of the output shaft 600;
a brake assembly 300, fixed to the outer ring of the output shaft 600, where the brake assembly 300 is connected to one of the connection faces 2001 of the reduction assembly 300 facing an end face of the wheel hub; and
a motor 100, circumferentially arranged outside the output shaft 600 and connected to the other of the connection faces 2001 of the reduction assembly 200 away from the brake assembly 300, where an air gap face 1000 of the motor 100 is parallel to the connection face 2001, and the reduction assembly 200, the brake assembly 300 and the motor 100 are located within a periphery of the wheel hub 700.

The two connection faces 2001 of the reduction assembly 200 are parallel to each other, and a thickness of the reduction assembly 200 is defined by a distance between the two connection faces 2001. The reduction assembly 200 has a small thickness, and thus the reduction assembly 200 is disc-shaped. The motor 100 and the brake assembly 300 are respectively connected to the two connection faces 2001 on two axial sides of the reduction assembly 200, so that the motor 100, the reduction assembly 200 and the brake assembly 300 are arranged in the axial direction of the output shaft 600. The air gap face 1000 of the motor 100 is parallel to the connection faces 2001, so that the motor 100 may be an axial field motor. The axial field motor has the characteristics of small axial dimension, high power density, light weight and high output torque and so on, so that the overall axial dimension is reduced, the entire assembly occupies a small space, high power density can be achieved, and there is sufficient space for arranging a corresponding sealing structure. Thus, the wheel hub driving assembly can operate stably and reliably. With the increase of the output torque of a conventional radial field motor, an axial dimension of the radial field motor increases. According to the present application, the air gap face 1000 of the motor 100 is parallel to the connection faces 2001, so that during the design of the torque of the motor 100, only the radial dimension of the motor 100 is changed, and the axial dimension of the motor 100 is almost unchanged. It can be seen that, the space for designing the motor 100 can be increased accordingly on the premise that the axial dimension of the entire wheel hub driving assembly is small. Moreover, the brake assembly 300 and the reduction assembly 200 are designed with the radial dimension of the motor 100 as an upper limit, so that the reduction assembly 200 with good transmission performance and the brake assembly 300 with good braking performance can be designed. Furthermore, each of the motor 100, the reduction assembly 200 and the brake assembly 300 is of a flat structure, so that the wheel hub driving assembly formed by assembling the motor 100, the reduction assembly 200 and the brake assembly 300 is flat, and the wheel hub driving assembly can utilize the space inside the wheel hub 700 and can be disposed in the wheel hub 700.

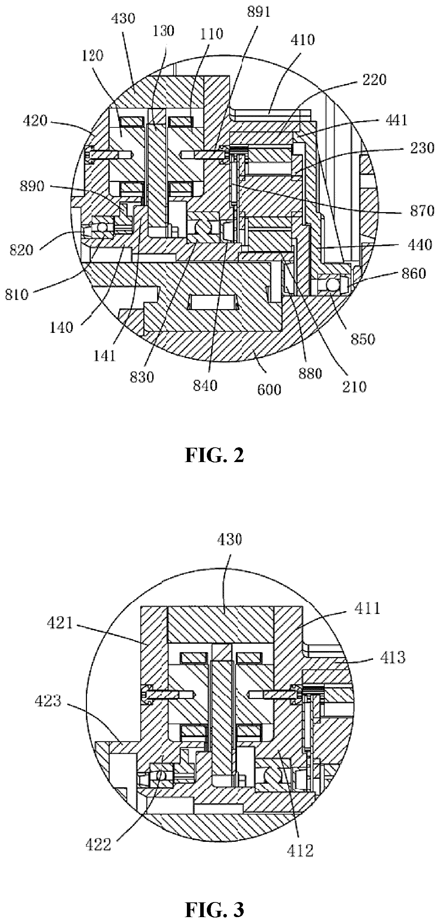

As shown in FIGS. 2, 3, 6 and 7, the wheel hub driving assembly further includes a housing 400 including:
a front housing 410, including a front end cover 411 and a reduction housing 413, where the reduction housing 413 is connected to an outer side surface of the front end cover 411, and the motor 100 is connected to an inner side surface of the front end cover 411;
a sealing housing 440, where an inner side surface of the sealing housing 440 is connected to one side of the reduction housing 413 away from the front end cover 411, and an outer side surface of the sealing housing 440 is connected to the brake assembly 300.

The reduction assembly 200 is located in the reduction housing 413, and is sealed between the front end cover 411 and the sealing housing 440.

The reduction housing 413 is integrally connected to the front end cover 411, and the sealing housing 440 is detachably connected to the reduction housing 413. For example, a connecting lug is provided on each of an outer ring of the sealing housing 440 and an outer ring of the reduction housing 413, and the connecting lugs corresponding to the sealing housing 440 and the reduction housing 413 are connected by a bolt, so that the sealing housing 440 is detachably connected to the reduction housing 413, so as to facilitate the reduction assembly 200 to be arranged inside the reduction housing 413.

Further, the inner side surface of the front end cover 411 forms one of the connection faces 2001, and the outer side surface of the sealing housing 440 forms the other of the connection faces 2001. The two connection faces 2001 are respectively arranged on the two axial sides of the reduction assembly 200, so that the motor 100, the reduction assembly 200 and the brake assembly 300 are stacked, resulting in an advantage of a small overall axial dimension.

Referring to FIGS. 2, 3, 6 and 7, the housing 400 further includes:
a rear housing 420, including a rear end cover 421 and a rear motor housing 422, where an inner ring of the rear end cover 421 extends to be connected to the rear motor housing 422; and
a side housing 430, connected to an outer ring of the front end cover 411 and an outer ring of the rear end cover 421.

The front housing 410 further includes a front motor housing 412, and an inner ring of the front end cover 411 extends to be connected to the front motor housing 412. The motor 100 is arranged between the front end cover 411 and the rear end cover 421. A radial inner side of the motor 100 is sealed by the front motor housing 412 and the rear motor housing 422, and a radial outer side of the motor 100 is sealed by the side housing 430.

The motor 100 is arranged between the inner side surface of the front end cover 411 and an inner side surface of the rear end cover 421. The radial inner side of the motor 100 is sealed by the front motor housing 412 and the rear motor housing 422, and the radial outer side of the motor is sealed by the side housing 430. The radial inner side of the motor 100 is sealed by the front motor housing 412 and the rear motor housing 422, and the radial outer side of the motor 100 is sealed by the side housing 430, so that the motor 100 is sealed inside the housing 400. Therefore, a coolant can be introduced into a cavity of the housing 400 for accommodating the motor 100 to cool the motor 100, so as to prevent the temperature of the motor 100 from rising during operation of the motor 100, thereby ensuring reliable operation of the motor 100. Moreover, the motor 100, the reduction assembly 200 and the brake assembly 300 share the housing 400, which makes the structure compact and prevents the axial dimension from being increased.

It is known from the above that the motor 100 may be an axial field motor, which has a radial dimension much larger than the axial dimension of the motor. The motor 100 may further be a double-stator single-rotor axial field motor. Referring to FIGS. 2 and 3, the motor 100 includes:
a front stator 110, fixed to the inner side surface of the front end cover 411;
a rear stator 120, fixed to the inner side surface of the rear end cover 421;
a rotor 130, retained between the front stator 110 and the rear stator 120, where an air gap is provided between the rotor 130 and each of the front stator 110 and the rear stator 120, and the air gap face 1000 is formed between the rotor 130 and each of the front stator 110 and the rear stator 120; and
a rotating shaft 140, rotatably connected to an inner ring of the front motor housing 412 and an inner ring of the rear motor housing 422 in a sealed manner, where a radial inner side of the rotor 130 extends between the front motor housing 412 and the rear motor housing 422, and is fixedly connected to the rotating shaft 140.

The front stator 110 may be fixed to the inner side surface of the front end cover 411 through a first bolt 891. The front end cover 411 is provided with a countersunk hole, so that the first bolt 891 is hidden in the front end cover 411 to prevent the first bolt 891 from protruding outward and increasing the volume. Similarly, the rear stator 110 may be fixed to the inner side surface of the rear end cover 421 through another first bolt 891, and the rear end cover 421 is provided with a countersunk hole for hiding the first bolt 891.

Referring to FIGS. 2 and 3, the front stator 110 is annular, and is accommodated between the front motor housing 412 and the side housing 430. The rear stator 120 is also annular, and is accommodated between the rear end cover 421 and the side housing 430. The rotor 130 is also annular, and accordingly, the front motor housing 412 and the rear motor housing 422 are respectively arranged on both axial sides of the rotor 130, so that the radial inner side of the rotor 130 is fixedly connected to a rotating shaft flange 141 provided on an outer ring of the rotating shaft 140. The rotating shaft flange 141 and the rear motor housing 422 are arranged on a same side, i.e. on a rear side of the rotor 130 in the axial direction. It can be seen that, the rotating shaft flange 141 is located on an inner side of the rear motor housing 422, and the radial inner side of the rotor 130 may be fixed to the rotating shaft flange 141 through a bolt.

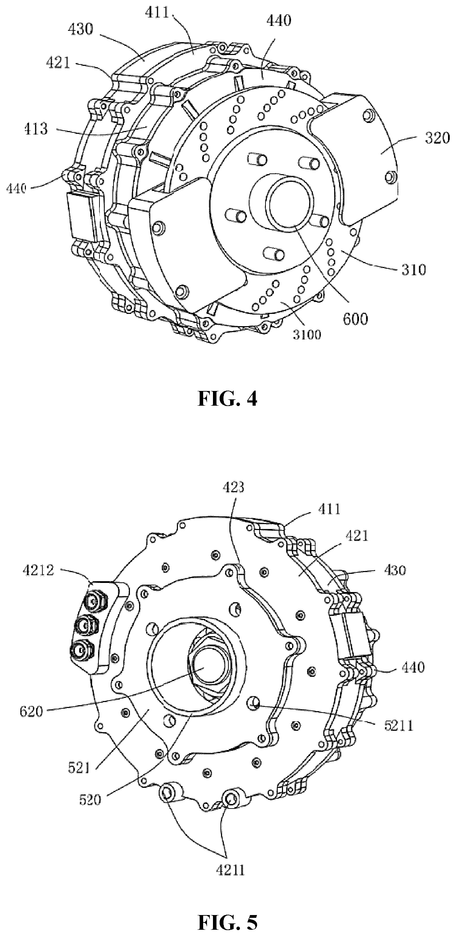

As shown in FIGS. 4 and 5, outer rings of the side housing 430, the front end cover 411 and the rear end cover 421 are provided with connecting lugs 440, and the connecting lugs 440 may be connected by bolts to achieve fixation. Each of two axial sides of the side housing 430 is provided with multiple connecting lugs 440, and the connecting lugs 440 on the two axial sides of the side housing 430 are correspondingly connected to the front end cover 411 and the rear end cover 421. The connecting lugs 440 located on one axial side of the side housing 430 are in one-to-one correspondence with the connecting lugs 440 located on the other axial side of the side housing 430, and the connecting lugs 440 on each of the two axial sides of the side housing 430 are circumferentially spaced apart from each other. During connection, the front end cover 411 is abutted against one axial side of the side housing 430, and the connecting lugs 440 on the front end cover 411 and the connecting lugs 440 on the side of the side housing 430 are in one-to-one correspondence and are connected by bolts. The rear end cover 421 is abutted against the other axial side of the side housing 430, and the connecting lugs on the rear end cover 421 and the connecting lugs on the other side of the side housing 430 for connection with the rear end cover 421 are connected by bolts. In this way, the side housing 430, the front end cover 411 and the rear end cover 421 are fixed relative to each other.

As shown in FIG. 2, a first bearing 810 is provided between the rear motor housing 422 and the rotating shaft 140, and a second bearing 830 is provided between the front motor housing 412 and the rotating shaft 140. As such, the rotating shaft 140 can smoothly rotate relative to the front housing 410 and the rear housing 420. The first bearing 810 and the second bearing 830 may be deep groove ball bearings, angular contact bearings or the like.

Referring to FIG. 2, a first oil seal 820 is provided between the rear motor housing 422 and the rotating shaft 140 to prevent external flying debris from entering the cavity of the housing 400 for accommodating the motor 100. A second oil seal 840 is provided between the front motor housing 412 and the rotating shaft 140 to prevent lubricating oil in the reduction assembly 200 from entering the cavity of the housing 400 for accommodating the motor 100.

Continuously referring to FIG. 2, each of the inner ring of the front motor housing 412, the inner ring of the rear motor housing 422 and the outer ring of the rotating shaft 140 is in a stepped shape to limit and fix the bearings and the oil seals. The first bearing 810 is described as an example. Two axial sides of the first bearing 810 respectively abut against a step of the inner ring of the rear motor housing 422 and a step of the outer ring of the rotating shaft 140 and are located therebetween, thereby limiting and fixing the first bearing 810.

The first oil seal 820 is located on an outer side of the first bearing 810 away from the rotating shaft flange 141, and the second oil seal 840 is located on an outer side of the second bearing 830 facing the reduction assembly 200. The first oil seal 820 is adjacent to the first bearing 810, the second bearing 830 is adjacent to the second oil seal 840, and the bearings and the oil seals are located on the inner side of the motor 100, and the step structures are used to arrange the bearings and the oil seals compactly, so as to avoid the increase of the sizes of the bearings, thereby providing more space for designing the motor, the reduction assembly and the brake assembly.

As shown in FIG. 2, a rotary transformer 890 is further provided between the rear motor housing 422 and the rotating shaft 140, and is located between the first bearing 810 and the rotating shaft flange 141 of the rotating shaft 140. The rotary transformer 890 is an electromagnetic sensor for measuring an angular displacement and an angular velocity of the rotating shaft. It is known from the above that the rotary transformer 890 is also arranged on the inner side of the motor, and is compactly arranged with the bearings and the oil seals. In this way, the space is fully utilized, and the overall occupied space is further reduced.

As shown in FIGS. 1 to 3, the wheel hub driving assembly further includes a wheel hub bearing assembly 500 including:
an inner bearing ring 510, fixedly connected to the outer ring of the output shaft 600; and
an outer bearing ring 520, fixed between the inner bearing ring 510 and the rotating shaft 140.

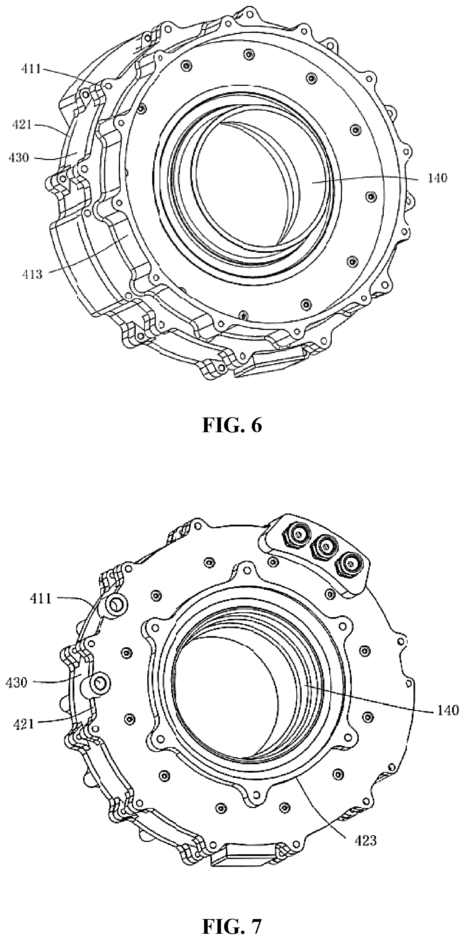

Specifically, the rear housing 420 further includes a connection housing 423 connected to an outer side surface of the rear end cover 421. An outer ring of the outer bearing ring 520 is provided with an outer ring flange 521 fixed to the connection housing 423. Referring to FIGS. 3 and 7, it can be seen that the outer bearing ring 520 is fixed. Each of an outer ring of the outer ring flange 521 and an outer ring of the connection housing 423 is provided with a connecting lug, and the connecting lugs of the outer ring flange 521 and the connection housing 423 are connected by a bolt, so that the outer ring flange 521 is fixed to an end face of the connection housing 423 away from the rear end cover 421. Moreover, the outer ring flange 521 is provided with multiple outer ring mounting holes 5211 for connecting a cantilever, so that the wheel hub driving assembly is supported by the cantilever.

Referring to FIG. 1, a left end of the outer bearing ring 520 extends out of the connection housing 423, and a right end of the outer bearing ring 520 is located inside a cavity of the reduction assembly 200, so that the motor 100 and the reduction assembly 200 are supported by the outer bearing ring 520. The inner bearing ring 510, which is rotatable relative to the outer bearing ring 520, may be arranged on a right side of the outer bearing ring 520, and may be locked to the output shaft 600 by a second bolt 620. The second bolt 620 is located on a left side of the output shaft 600, and is located inside a cavity of the motor. Further, the inner bearing ring 510 is limited between a step of the outer ring of the output shaft 600 and the second bolt 620.

As shown in FIGS. 1 to 3, a right end of the rotating shaft 140 extends into the reduction housing 413, so that the reduction assembly 200 can be in transmission connection with the outer ring of the rotating shaft 140 extending into the reduction housing 413. The reduction assembly 200 may be a planetary gear reduction assembly, which has a relatively small axial dimension and a relatively large radial dimension to better fit the shape of the axial field motor, thereby improving the space utilization thereof. Compared with the conventional radial field motor, the combination of the planetary gear reduction assembly and the axial field motor can enable the planetary gear reduction assembly to have a larger radial dimension while the volume is unchanged, thereby achieving a higher transmission ratio and a higher output torque.

Specifically, the reduction assembly 200 includes a sun gear 210, a gear ring 220 and a planetary gear carrier assembly 230. The sun gear 210 is fixed to the outer ring of the rotating shaft 140, and may be in interference fit with the outer ring of the rotating shaft 140. The gear ring 220 is fixed to an inner ring of the reduction housing 413, and may be in interference fit with the inner ring of the reduction housing 413. The planetary gear carrier assembly 230 is in transmission connection between the sun gear 210 and the gear ring 220. The planetary gear carrier assembly 230 includes multiple planetary gears engaged between the sun gear 210 and the gear ring 220, and a planetary carrier connected to the multiple planetary gears. A fourth bearing 870 is provided between the planetary carrier and the front end cover 411 to axially limit the planetary gear carrier assembly 230, so that the planetary gear carrier assembly 230 can rotate relative to the front housing 410. The fourth bearing 870 may be a thrust roller bearing or the like. The sealing housing 440 is provided with a stopper 441 for abutting against the gear ring 220 of the reduction assembly 200, so that the gear ring 220 is axially limited between the front end cover 411 and the stopper 441. In this way, two axial sides of the planetary carrier of the reduction assembly 200 are respectively limited by the fourth bearing 870 and the sealing housing 440.

Referring to FIG. 2, the planetary carrier passes through a gap between the rotating shaft 140 and the sealing housing 440, and is connected to the outer ring of the output shaft 600. As such, the reduction assembly 200 is in transmission connection with the motor 100 and the output shaft 600, thereby driving the output shaft 600 and the wheel hub 700 connected to the output shaft 600 to rotate.

A third oil seal 860 and a fourth oil seal 880 are respectively provided on two sides of the planetary carrier passing through the gap, so that a cavity of the housing 400 for mounting the reduction assembly 200 can be sealed, so as to seal the lubricating oil in the reduction assembly 200. Specifically, the third oil seal 860 is arranged between the sealing housing 440 and the output shaft 600. The fourth oil seal 880 is located between the wheel hub bearing assembly 500 and the sealing housing 440, and is arranged between the output shaft 140 and the rotating shaft 600. In addition, a third bearing 850 may be provided between the sealing housing 440 and the output shaft 600, and the third bearing 850 may be a deep groove ball bearing, an angular contact bearing or the like. The third oil seal 860 is adjacent to the third oil seal 850, and is located on an outer side of the third bearing 850 away from the fourth oil seal 880.

As shown in FIG. 2, the first bearing 810 and the second bearing 830 are substantially located at a same level, and the size of the second bearing 830 is larger than the size of the first bearing 810 to adapt to the front housing 410 with large volume and heavy weight, thereby ensuring smooth rotation of the rotating shaft 140 relative to the front housing 410. Steps are provided on the outer ring of the rotating shaft 140 and an inner ring of the front housing 410 to ensure that the second bearing 830 is arranged between the rotating shaft 140 and the front housing 410 and allow the rotating shaft 140 to smoothly rotate relative to the front housing 410 and the rear housing 420. The sealing of the cavity, in which the motor 100 is mounted, is achieved by using the first oil seal 820 and the second oil seal 840, thereby preventing oil leakage, e.g. preventing the lubricating oil in the reduction assembly 200 from entering the cavity corresponding to the motor 100 through the second oil seal 840. Moreover, the first bearing 810 and the second bearing 830 are isolated from each other by the rotor 130 and the rotating shaft flange 141, so as to prevent mounting positions of the first bearing 810 and the second bearing 830 from facing each other, thereby effectively improving the sealing performance.

The third bearing 850 is lower than the second bearing 830, that is, the third bearing 850 is located on an inner side of the second bearing 830. Specifically, the third bearing 850 and the outer bearing ring 520 are at a same level, and in this way, the space is fully utilized, and the reduction assembly 200 and the output shaft 600 are in transmission connection with each other. That is, the planetary carrier of the reduction assembly 200 passes through the space between the rotating shaft 140 and the sealing housing 440 to be connected to the output shaft 600, and the oil is prevented from leaking from the reduction assembly 200 with the cooperation of the fourth oil seal 880. In addition, the third bearing 850 and the second bearing 830 are at different levels, and are respectively located on the two sides of the reduction assembly 200, so as to prevent mounting positions of the third bearing 850 and the second bearing 830 from facing each other, thereby further avoiding oil leakage.

As shown in FIGS. 1, 4 and 8, the brake assembly 300 includes:
a brake disc 310, where an output shaft flange 610 is provided on the outer ring of the output shaft 600 and is located on an outer side of the sealing housing 440, the brake disc 310 abuts against the end face of the wheel hub and the output shaft flange 610 and is fixed between the end face of the wheel hub and the output shaft flange 610, and brake faces 3100 are respectively formed on two axial sides of the brake disc 310; and
at least one brake caliper 320, fixed to the outer side surface of the sealing housing 440 and connected to the two brake faces 3100 of the brake disc 310 for braking.

Preferably, the brake caliper 320 is C-shaped, and the brake disc 310 is inserted into the brake caliper 320, so that the brake caliper 320 is connected to the two brake faces 3100 of the brake disc 310 for braking. The number of brake calipers 320 is two, and the two brake calipers 320 are symmetrically arranged on the outer side surface of the sealing housing 440. The sealing housing 440 is provided with brake caliper mounting holes 442, and the brake calipers 320 are fixed to the outer side surface of the sealing housing 440 through bolts. In addition, the outer side surface of the sealing housing 440 is provided with multiple reinforcement ribs 441 to ensure the structural strength and the reliable operation of the product.

It is known from the above that, the brake assembly 300 is also of a disc-shaped structure, and the brake faces 3100 of the brake assembly 300 may be parallel to the connection faces 2001. In this way, each of the motor 100, the reduction assembly 200 and the brake assembly 300 is of a flat structure, thereby reducing the overall occupied space.

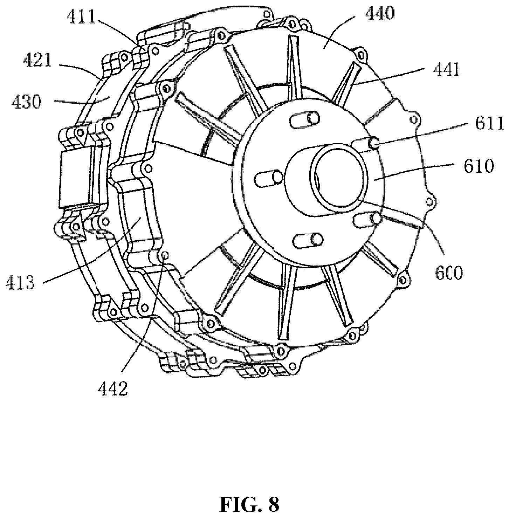

Referring to FIG. 8, the output shaft flange 610 is provided with a wheel hub bolt 611 for connecting the wheel hub.

As shown in FIG. 5, the rear end cover 421 is provided with an inlet 4211 and an outlet 4211 in communication with the cavity for accommodating the motor, so that the coolant can be introduced into or discharged from the cavity for accommodating the motor through the inlet 4211 and the outlet 4211. In addition, the rear end cover 421 may be further provided with a three-phase wire outlet structure for wire outlet of a stator winding.

In summary, the two connection faces 2001 of the reduction assembly 200 are parallel to each other, and the thickness of the reduction assembly 200 is defined by the distance between the two connection faces 2001. The reduction assembly 200 has a small thickness, and thus the reduction assembly 200 is disc-shaped. The motor 100 and the brake assembly 300 are respectively connected to the two connection faces 2001 on the two axial sides of the reduction assembly 200, so that the motor 100, the reduction assembly 200 and the brake assembly 300 are arranged in the axial direction of the output shaft 600. The air gap faces 1000 of the motor 100 are parallel to the connection faces 2001, so that the motor 100 may be an axial field motor. The axial field motor has the characteristics of small axial dimension, high power density, light weight and high output torque and so on, so that the overall axial dimension is reduced, the entire assembly occupies a small space, high power density can be achieved, and there is sufficient space for arranging a corresponding sealing structure. Thus, the wheel hub driving assembly can operate stably and reliably. As the output torque of the conventional radial field motor increases, the axial dimension of the conventional radial field motor increases. According to the present application, the air gap faces 1000 of the motor 100 are parallel to the connection faces 2001, so that during the design of the torque of the motor 100, only the radial dimension of the motor 100 is changed, and the axial dimension of the motor 100 is almost unchanged. It can be seen that, the space for designing the motor 100 can be increased accordingly on the premise that the axial dimension of the entire wheel hub driving assembly is small. Moreover, the brake assembly 300 and the reduction assembly 200 are designed with the radial dimension of the motor 100 as the upper limit, and the reduction assembly 200 with good transmission performance and the brake assembly 300 with good braking performance can be designed. Furthermore, each of the motor 100, the reduction assembly 200 and the brake assembly 300 is of a flat structure, so that the wheel hub driving assembly formed by assembling the motor 100, the reduction assembly 200 and the brake assembly 300 is flat, and the wheel hub driving assembly can utilize the space inside the wheel hub 700 and can be disposed in the wheel hub 700. The bearings and the oil seals are compactly arranged on the inner sides of the motor and the reduction assembly, thereby making full use of the space and further reducing the overall occupied space.

The embodiments described above are merely for illustrating the technical ideas and characteristics of the present application. The object thereof is to enable those skilled in the art to understand the content of the present application and implement based on the content. The application scope of the present application are not limited to only these embodiments, that is, any equivalent variations and modifications based on the spirit disclosed in the present application are deemed to fall within the scope of the present application.

## Claims

1. A wheel hub driving assembly, comprising:
an output shaft (600), connected to a wheel hub (700);
a reduction assembly (200), in transmission connection with an outer ring of the output shaft (600), wherein two connection faces (2001) are respectively provided on both sides of the reduction assembly (600) in an axial direction of the output shaft (600);
a brake assembly (300), fixed to the outer ring of the output shaft (600) and connected to one of the two connection faces (2001) of the reduction assembly (200) facing an end face of the wheel hub; and
a motor (100), circumferentially arranged outside the output shaft (600) and connected to the other of the two connection faces (2001) of the reduction assembly (200) away from the brake assembly (300), wherein an air gap face (1000) of the motor (100) is parallel to the connection faces (2001), and the reduction assembly (200), the brake assembly (300) and the motor (100) are located within a periphery of the wheel hub (700).

2. The wheel hub driving assembly according to claim 1, further comprising a housing (400), wherein the housing (400) comprises:
a front housing (410), comprising a front end cover (411) and a reduction housing (413), wherein the reduction housing (413) is connected to an outer side surface of the front end cover (411), and the motor (100) is connected to an inner side surface of the front end cover (411);
a sealing housing (440), wherein an inner side surface of the sealing housing (440) is connected to one side of the reduction housing (413) away from the front end cover (411), and an outer side surface of the sealing housing (440) is connected to the brake assembly (300); wherein
the reduction assembly (200) is located in the reduction housing (413), and is sealed between the front end cover (411) and the sealing housing (440).

3. The wheel hub driving assembly according to claim 2, wherein the brake assembly (300) comprises:
a brake disc (310), wherein an output shaft flange (610) is provided on the outer ring of the output shaft (600), the brake disc (310) abuts against the end face of the wheel hub and the output shaft flange (610) and is fixed between the end face of the wheel hub and the output shaft flange (610), and brake faces (3100) are formed on two axial sides of the brake disc (310); and
at least one brake caliper (320), fixed to the outer side surface of the sealing housing (440) and connected to the two brake faces (3100) of the brake disc (310) for braking.

4. The wheel hub driving assembly according to claim 2, wherein the housing (400) further comprises:
a rear housing (420), comprising a rear end cover (421) and a rear motor housing (422), wherein an inner ring of the rear end cover (421) extends to be connected to the rear motor housing (422); and
a side housing (430), connected to an outer ring of the front end cover (411) and an outer ring of the rear end cover (421); wherein
the front housing (410) further comprises a front motor housing (412), an inner ring of the front end cover (411) extends to be connected to the front motor housing (412), and the motor (100) is arranged between the front end cover (411) and the rear end cover (421); and
a radial inner side of the motor (100) is sealed by the front motor housing (412) and the rear motor housing (422), and a radial outer side of the motor (100) is sealed by the side housing (430).

5. The wheel hub driving assembly according to claim 4, wherein the motor (100) comprises:
a front stator (110), fixed to the inner side surface of the front end cover (411);
a rear stator (120), fixed to an inner side surface of the rear end cover (421);
a rotor (130), retained between the front stator (110) and the rear stator (120), wherein an air gap is provided between the rotor (130) and each of the front stator (110) and the rear stator (120), and the air gap face (1000) is formed between the rotor (130) and each of the front stator (110) and the rear stator (120); and
a rotating shaft (140), rotatably connected to an inner ring of the front motor housing (412) and an inner ring of the rear motor housing (422) in a sealed manner, wherein a radial inner side of the rotor (130) extends between the front motor housing (412) and the rear motor housing (422), and is fixedly connected to the rotating shaft (140).

6. The wheel hub driving assembly according to claim 5, further comprising a wheel hub bearing assembly (500), wherein the wheel hub bearing assembly (500) comprises:
an inner bearing ring (510), fixedly connected to the outer ring of the output shaft (600); and
an outer bearing ring (520), fixed between the inner bearing ring (510) and the rotating shaft (140).

7. The wheel hub driving assembly according to claim 6, wherein the rear housing (420) further comprises a connection housing (423) connected to an outer side surface of the rear end cover (421), and an outer ring flange (521) is provided on an outer ring of the outer bearing ring (520) and is fixed to the connection housing (423).

8. The wheel hub driving assembly according to claim 5, further comprising:
a first bearing (810), connected between the rear motor housing (422) and the rotating shaft (140);
a second bearing (830), connected between the front motor housing (412) and the rotating shaft (140); and
a third bearing (850), connected between the sealing housing (440) and the output shaft (600).

9. The wheel hub driving assembly according to claim 2, wherein
the reduction assembly (200) is a planetary gear reduction assembly;
two axial sides of a planetary carrier of the reduction assembly (200) are respectively limited by a fourth bearing (870) and the sealing housing (440), and the fourth bearing (870) is connected between the front end cover (411) and the planetary carrier; and
the sealing housing (440) is provided with a stopper (441) for abutting against a gear ring (220) of the reduction assembly (200).

10. The wheel hub driving assembly according to claim 6, further comprising:
a first oil seal (820), arranged between the rear motor housing (422) and the rotating shaft (140) and located on an outer side of the first bearing (810);
a second oil seal (840), arranged between the front motor housing (412) and the rotating shaft (140) and located on an outer side of the second bearing (830);
a third oil seal (860), arranged between the sealing housing (440) and the output shaft (600) and located on an outer side of the third bearing (850); and
a fourth oil seal (880), located between the wheel hub bearing assembly (500) and the sealing housing (440) and arranged between the output shaft (140) and the rotating shaft (600).
